# EUROPEAN PATENT APPLICATION

(11) **EP 4 435 694 A1**
(43) Date of publication of application: **25.09.2024**
(21) Application number: 22894572.1
(22) Date of filing: 24.10.2022
(51) Int. Cl.: G06Q 10/08

(54) **MATERIAL EX-WAREHOUSE METHOD AND DEVICE**

(30) Priority: 19.11.2021 CN 202111408214
(71) Applicant: Shenzhen Kubo Software Co., Ltd, Shenzhen, Guangdong 518100 (CN)
(72) Inventor: ZHOU, Hongxia, Shenzhen, Guangdong 518100 (CN); QIU, Jianzhu, Shenzhen, Guangdong 518100 (CN)
(74) Representative: Gulde & Partner
(86) International application number: PCT/CN2022/126979
(87) International publication number: WO 2023/088035

(57) **Abstract**

This application provides a material outbound method and a device, and relates to the field of goods carrying device technologies. The method includes: determining a first outbound order corresponding to a first robot among at least one robot, where a carrying task performed by the at least one robot corresponds to a same workstation, and the first robot is a robot that first carries a material to the workstation; controlling a third robot according to a control strategy; and determining the control strategy for the third robot based on whether robots corresponding to the first outbound order include a second robot, where the second robot is a robot other than the first robot that corresponds to the first outbound order, the control strategy includes controlling the third robot to suspend performing a carrying task, the carrying task includes a carrying task corresponding to at least one second outbound order, and the at least one second outbound order is an outbound order other than the first outbound order among outbound orders that are assigned to the workstation. This application may ensure that a plurality of materials of a same outbound order are continuously carried to the workstation, which may reduce confusion of materials of different orders.

## Description

### CROSS-REFERENCES

This application claims priority to Chinese Patent Application No. 202111408214.9, entitled "MATERIAL OUTBOUND METHOD AND DEVICE" filed with the China National Intellectual Property Administration on November 19, 2021, which is incorporated herein by reference in its entirety.

### TECHNICAL FIELD

Embodiments of this application relate to the field of goods carrying device technologies, and in particular, to a material outbound method and a device.

### BACKGROUND OF THE INVENTION

Smart warehousing is an important part of a logistics process. A robot can replace a person to carry a container, and plays an important role in the smart warehousing. The robot can carry materials from a warehouse to a workstation, to pick out materials specified in an outbound order.

When at least two outbound orders are assigned to one workstation, how to reduce confusion of materials between different outbound orders is an issue that urgently needs to be resolved.

### SUMMARY OF THE INVENTION

Embodiments of this application provide a material outbound method and a device, to reduce confusion between materials of different outbound orders.

According to a first aspect, an embodiment of this application provides a material outbound method, including:
determining a first outbound order corresponding to a first robot among at least one robot, where a carrying task performed by the at least one robot corresponds to a same workstation, and the first robot is a robot among the at least one robot that first carries a material to the workstation;
determining a control strategy for a third robot based on whether robots corresponding to the first outbound order include a second robot, where the second robot is a robot other than the first robot that corresponds to the first outbound order, the control strategy includes controlling the third robot to suspend performing a carrying task, the carrying task includes a carrying task corresponding to at least one second outbound order, and the at least one second outbound order is an outbound order other than the first outbound order among outbound orders that are assigned to the workstation; and
controlling the third robot according to the control strategy.

Optionally, the determining the control strategy for the third robot based on whether the robots corresponding to the first outbound order include the second robot includes:
determining, if the robots corresponding to the first outbound order include the second robot, that the control strategy for the third robot includes controlling the third robot to suspend performing the carrying task.

Optionally, after the controlling the third robot according to the control strategy, the method further includes:
controlling, when all the robots corresponding to the first outbound order arrive at the workstation, the third robot to continue performing the carrying task.

Optionally, the determining the control strategy for the third robot based on whether the robots corresponding to the first outbound order include the second robot includes:
determining, if the robots corresponding to the first outbound order include only the first robot, that the control strategy for the third robot includes controlling the third robot to suspend performing the carrying task, or control the third robot to continue performing the carrying task, and march to a corresponding queuing position of the workstation to queue.

Optionally, each robot corresponds to one outbound order.

Optionally, the controlling the third robot to suspend performing the carrying task includes:
controlling the third robot to retrieve a material of the second outbound order to the third robot, and to wait at a position outside the workstation.

Optionally, each robot corresponds to at least two outbound orders, the third robot includes a fourth robot, carrying tasks of the fourth robot include a task corresponding to the first outbound order and the task corresponding to the second outbound order, and the controlling the third robot to suspend performing the carrying task includes:
controlling the fourth robot to suspend performing the carrying task of the second outbound order, and continue performing the carrying task of the first outbound order.

Optionally, the controlling the fourth robot to suspend performing the carrying task of the second outbound order includes:
controlling, if the fourth robot does not retrieve a material of the second outbound order to the third robot, the fourth robot to suspend performing the carrying task of the second outbound order.

Optionally, the controlling the fourth robot to suspend performing the carrying task of the second outbound order, and continue performing the carrying task of the first outbound order includes:
controlling, if the fourth robot retrieves a material of the second outbound order to the fourth robot, the third robot to perform the carrying task of the first outbound order, to place the materials of the first outbound order on the workstation; and
controlling the fourth robot to leave from the workstation.

Optionally, the controlling the fourth robot to leave from the workstation includes:
controlling, if the fourth robot is not a robot that last arrives among the robots corresponding to the first outbound order, the fourth robot to leave from the workstation.

Optionally, the method further includes:
controlling, if the fourth robot is a robot that last arrives among the robots corresponding to the first outbound order, the fourth robot to place the material of the second outbound order on the workstation.

Optionally, the controlling the fourth robot to leave from the workstation includes:
controlling, after controlling the fourth robot to carry remaining materials to the fourth robot, the fourth robot to wait at a position outside the workstation, where the remaining materials include a to-be-carried material of the fourth robot.

Optionally, the position outside the workstation includes at least one of the following: a first position at which the fourth robot is located when the material of the second outbound order is retrieved, and any position that is passed through by the fourth robot when moving from the first position to the workstation.

Optionally, the method further includes:
assigning a carrying task to the at least one robot based on a preset order, where the preset order includes at least one of the following: a priority order of at least two outbound orders, and a time order in which the at least two outbound orders are assigned to the workstation.

Optionally, a material of each outbound order is picked into a same material truck.

According to a second aspect, an embodiment of this application provides a material outbound apparatus, including:
a first outbound order determining module, configured to determine a first outbound order corresponding to a first robot among at least one robot, where a carrying task performed by the at least one robot corresponds to a same workstation, and the first robot is a robot among the at least one robot that first carries a material to the workstation;
a control strategy determining module, configured to determine a control strategy for a third robot based on whether robots corresponding to the first outbound order include a second robot, where the second robot is a robot other than the first robot that corresponds to the first outbound order, the control strategy includes controlling the third robot to suspend performing a carrying task, the carrying task includes a carrying task corresponding to at least one second outbound order, and the at least one second outbound order is an outbound order other than the first outbound order among outbound orders that are assigned to the workstation; and
a third robot controlling module, configured to control the third robot according to the control strategy.

Optionally, the control strategy determining module is further configured to:
determine, if the robots corresponding to the first outbound order include the second robot, that the control strategy for the third robot includes controlling the third robot to suspend performing the carrying task.

Optionally, the third robot controlling module is further configured to:
after controlling the third robot according to the control strategy, control, when all the robots corresponding to the first outbound order arrive at the workstation, the third robot to continue performing the carrying task.

Optionally, the control strategy determining module is further configured to:
determine a control strategy for a third robot based on whether robots corresponding to the first outbound order include a second robot, and determine, if the robots corresponding to the first outbound order include only the first robot, that the control strategy for the third robot is to control the third robot to suspend performing the carrying task, or control the third robot to continue performing the carrying task, and march to a corresponding queuing position of the workstation to queue.

Optionally, each robot corresponds to one outbound order.

Optionally, the control strategy includes:
controlling the third robot to retrieve a material of the second outbound order to the third robot, and to wait at a position outside the workstation.

Optionally, each robot corresponds to at least two outbound orders, the third robot includes a fourth robot, carrying tasks of the fourth robot include a task corresponding to the first outbound order and the task corresponding to the second outbound order, and the control strategy includes:
controlling the fourth robot to suspend performing the carrying task of the second outbound order, and continue performing the carrying task of the first outbound order.

Optionally, the control strategy includes:
controlling, if the fourth robot does not retrieve a material of the second outbound order to the fourth robot, the fourth robot to suspend performing the carrying task of the second outbound order.

Optionally, the control strategy includes:
controlling, if the fourth robot retrieves a material of the second outbound order to the fourth robot, the fourth robot to perform the carrying task of the first outbound order, to place the materials of the first outbound order on the workstation; and
controlling the fourth robot to leave from the workstation.

Optionally, the control strategy includes:
controlling, if the fourth robot is not a robot that last arrives among the robots corresponding to the first outbound order, the fourth robot to leave from the workstation.

Optionally, the control strategy includes:
controlling, if the fourth robot is a robot that last arrives among the robots corresponding to the first outbound order, the fourth robot to place the material of the second outbound order on the workstation.

Optionally, the control strategy includes:
controlling, after controlling the fourth robot to carry remaining materials to the fourth robot, the fourth robot to wait at a position outside the workstation, where the remaining materials include a to-be-carried material of the fourth robot.

Optionally, the position outside the workstation includes at least one of the following: a first position at which the fourth robot is located when the material of the second outbound order is retrieved, and any position that is passed through by the fourth robot when moving from the first position to the workstation.

Optionally, the apparatus further includes:
a carrying task assignment module, configured to assign a carrying task to the at least one robot based on a preset order, where the preset order includes at least one of the following: a priority order of at least two outbound orders, and a time order in which the at least two outbound orders are assigned to the workstation.

Optionally, a material of each outbound order is picked into a same material truck.

According to a third aspect, an embodiment of this application provides an electronic device, including: at least one processor and a memory;
the memory stores computer-executable instructions; and
the at least one processor executes the computer-executable instructions stored in the memory, to enable the electronic device to perform the method according to the first aspect.

According to a fourth aspect, an embodiment of this application provides a computer-readable storage medium. The computer-readable storage medium stores computer-executable instructions, and when a processor executes the computer-executable instructions, a computer device is enabled to perform the method according to the first aspect.

According to a fifth aspect, an embodiment of this application provides a computer program. The computer program is configured to perform the method according to the first aspect.

The material outbound method and the device provided in this embodiment may determine a first outbound order corresponding to a first robot among at least one robot, where a carrying task performed by the at least one robot corresponds to a same workstation, and the first robot is a robot among the at least one robot that first carries a material to the workstation; control the third robot according to the control strategy; and determine a control strategy for a third robot based on whether robots corresponding to the first outbound order include a second robot, where the second robot is a robot other than the first robot that corresponds to the first outbound order, the control strategy includes controlling the third robot to suspend performing a carrying task, the carrying task includes a carrying task corresponding to at least one second outbound order, and the at least one second outbound order is an outbound order other than the first outbound order among outbound orders that are assigned to the workstation. In embodiments of this application, the third robot of the second outbound order may be controlled to suspend performing the carrying task when the first robot of the first outbound order first arrives at the workstation. This may ensure that a plurality of materials of a same outbound order are continuously carried to the workstation, and there is no material of another outbound order in between. In this way, sorting personnel may continuously sort the materials of the same outbound order. This avoids sorting the material of the second outbound order into the material of the first outbound order, and also reduces occurrence of confusion of materials.

### BRIEF DESCRIPTION OF DRAWINGS

To describe the technical solutions in embodiments of this application or the related art more clearly, the following briefly describes the accompanying drawings required for describing the embodiments or the related art. Apparently, the accompanying drawings in the following description show some embodiments of this application, and a person of ordinary skill in the art may still derive other drawings from the accompanying drawings without creative efforts.
FIG. 1 is an example of a top view of a warehouse applicable to an embodiment of this application;
FIG. 2 is an example of a side view of a rack applicable to an embodiment of this application;
FIG. 3 is an example of a schematic diagram of a structure of a robot according to this application;
FIG. 4 is an example of a flowchart of specific steps of a material outbound method according to an embodiment of this application;
FIG. 5 is an example of a structural block diagram of a material outbound apparatus according to an embodiment of this application; and
FIG. 6 is an example of a structural block diagram of an electronic device according to an embodiment of this application.

### DETAILED DESCRIPTION

To make the objectives, technical solutions, and advantages of embodiments of this application clearer, the following clearly and completely describes the technical solutions in embodiments of this application with reference to accompanying drawings in embodiments of this application. It is clear that the described embodiments are merely some rather than all of embodiments of this application. All other embodiments obtained by a person of ordinary skill in the art based on embodiments of this application without making creative efforts shall fall within the protection scope of this application.

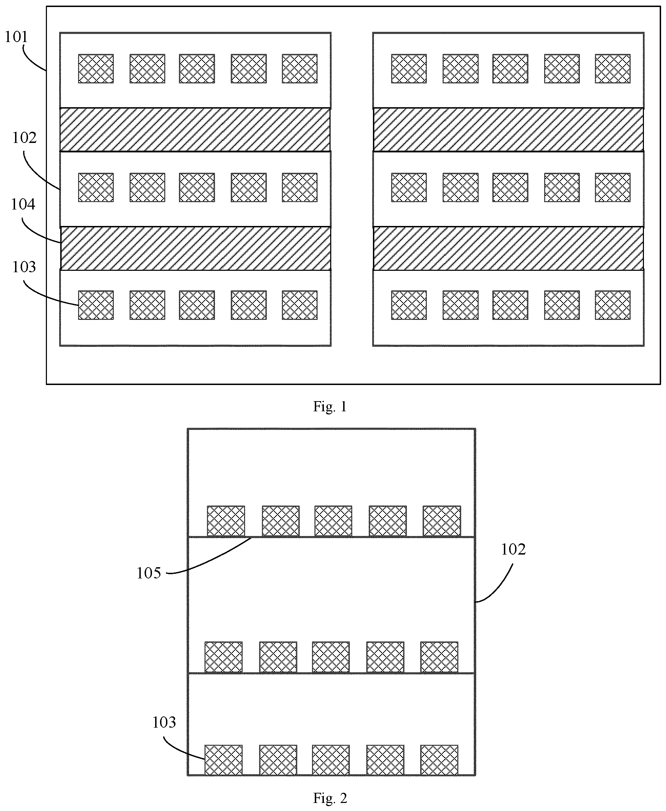

Embodiments of this application may be used in the field of smart warehousing technologies. In the field of smart warehousing technologies, a material may be stored on a rack in a warehouse. The material may be a separate good or a container loaded with goods. FIG. 1 is an example of a top view of a warehouse applicable to an embodiment of this application. Referring to FIG. 1, six racks 102 are set up in a warehouse 101, where every two racks 102 are set up side by side in one row. A total of three rows of racks 102 are set up in the warehouse 101. A material 103 may be placed on each of the racks 102.

Certainly, each of the racks 102 may be provided with a plurality of storage layers. Each storage layer may be provided with a plurality of storage locations, and the material 103 may be placed at each storage location. In this way, with the plurality of storage layers and the plurality of storage locations, storage capacities of the racks 102 for the material 103 are increased. In FIG. 1, it may be learnt that, each material 103 occupies one storage location. FIG. 2 is an example of a side view of a rack applicable to an embodiment of this application. Referring to FIG. 2, a rack 102 includes three storage layers 105, each storage layer 105 includes five storage locations, and each storage location is configured to receive one material 103.

To improve efficiency of material carrying, a material may usually be carried by a robot. The robot may retrieve the material from the storage layer on the rack to a storage layer of the robot, or may place the material that is on the storage layer of the robot on the storage layer on the rack.

An empty area between the racks 102 in FIG. 1 is needed, which may be referred to as an aisle, to help the robot access the rack through the aisle. It may be learnt that, there are four aisles 104 in FIG. 1. When the robot needs to place the material on the rack 102, the robot may move to a corresponding aisle 104, to place the material that is on the storage layer of the robot on the rack 102. When the robot needs to retrieve the material from the rack 102, the robot may also move to the corresponding aisle 104, to retrieve the material on the storage layer of the rack 102 and place the material on the storage layer of the robot.

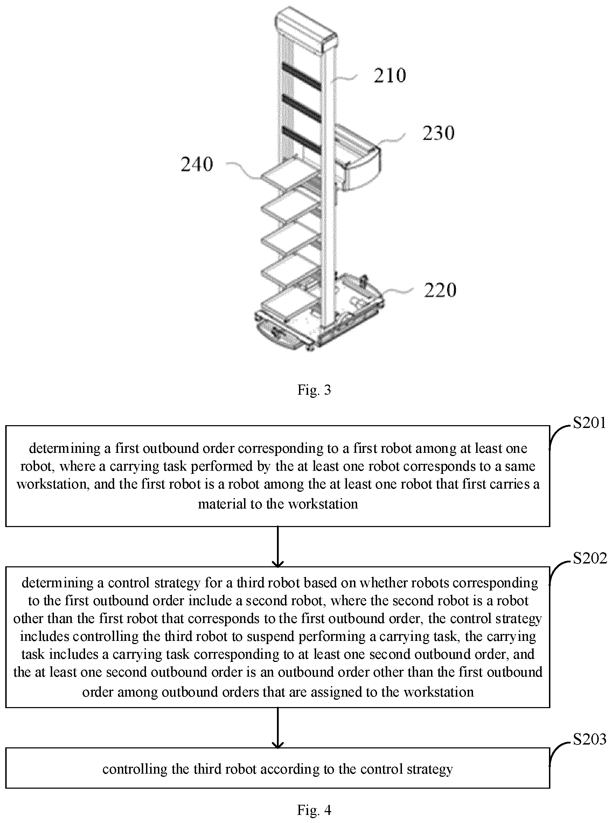

FIG. 3 is an example of a schematic diagram of a structure of a robot according to an embodiment of this application. As shown in FIG. 3, the robot includes a support component 210, a mobile chassis 220, a retrieving and depositing apparatus 230, and a storage shelving unit 240. The storage shelving unit 240 is mounted on the mobile chassis 220, and both the retrieving and depositing apparatus 230 and the support component 210 are mounted on the storage shelving unit 240. Several storage layers may be set up on the storage shelving unit 240, on which one or more to-be-carried materials are placed. A lifting component is mounted on the support component 210 to drive the retrieving and depositing apparatus 230 to move up and down, so that the retrieving and depositing apparatus 230 is aligned with any storage unit on the storage shelving unit 240, or is aligned with a rack and/or a material in a warehouse. The retrieving and depositing apparatus 230 may rotate around a vertical direction and adjust an orientation, to align with the storage unit, or align with the rack and/or the material. The retrieving and depositing apparatus 230 is configured to load or unload the material, to transport the material between the rack and the storage unit.

The foregoing robot may carry the material based on an outbound order. When the outbound order is assigned to one workstation, the robot transfers a material needed in the outbound order from the warehouse to the workstation, so that an operator picks the material on the workstation.

The foregoing outbound order may be one order received by a system, or may be a combined order including a plurality of orders received by a system.

In the foregoing process, one or more outbound orders may be assigned to one workstation. When there are a plurality of outbound orders, the operator needs to pick materials needed in one outbound order together, so that the material corresponding to one outbound order is packaged and shipped or transported to a corresponding production line. However, a manual operation of the operator inevitably makes errors. As a result, a material that does not belong to one outbound order may be picked together with the material corresponding to the outbound order. Such a scenario may be referred to as confusion of materials.

To resolve the foregoing problem, it needs to be ensured that a plurality of materials of a same outbound order are continuously carried to the workstation, and there is no material of another outbound order in between. In this way, sorting personnel may continuously sort the materials of the same outbound order. In this way, the material of the another outbound order is not sorted into the materials of the outbound order.

To enable the plurality of materials of the same outbound order to be continuously carried to the workstation, after all materials of a specific order are carried to the workstation, or in an initial period after the system starts, when a specific robot first carries a material to the workstation, the robot may be referred to as a first robot, an outbound order to which the material belongs is referred to as a first outbound order, another robot that performs an outbound task corresponding to the first outbound order is referred to as a second robot, and a robot of another outbound order other than the first outbound order that corresponds to the workstation is referred to as a third robot. Therefore, the third robot may be controlled to suspend performing a carrying task, and the second robot may be controlled to continue performing the carrying task. This may ensure that a plurality of materials of the first outbound order are continuously carried to the workstation, and there is no material of another outbound order in between. This avoids sorting the material of the another outbound order into the materials of the first outbound order, and also reduces occurrence of confusion of materials.

The following describes the technical solutions of embodiments of this application and how to resolve the foregoing technical problems according to the technical solutions of this application in detail by using specific embodiments. The following several specific embodiments may be combined with each other, and the same or similar concepts or processes may not be described repeatedly in some embodiments. The following describes embodiments of this application with reference to the accompanying drawings.

Various embodiments disclosed below in this application may be applied to a control system of a robot. The control system may be a system with a single function, or may include a plurality of subsystems with different functions.

FIG. 4 is an example of a flowchart of specific steps of a material outbound method according to an embodiment of this application. As shown in FIG. 4, the method may include the following operations.

In block S201: Determining a first outbound order corresponding to a first robot among at least one robot, where a carrying task performed by the at least one robot corresponds to a same workstation, and the first robot is a robot among the at least one robot that first carries a material to the workstation.

The foregoing workstation is any workstation configured to pick a material. A plurality of outbound orders are assigned to the workstation, and each outbound order needs one or more materials. Each material corresponds to a carrying robot. The robot is configured to transport the material from a warehouse to the workstation, to pick the material on the workstation.

When one of the plurality of robots first carries the material to the workstation, the robot may be determined as a first robot. An outbound order corresponding to the material carried by the first robot is determined as a first outbound order.

The foregoing carrying task may be assigned to at least one robot in a preset order, and the preset order includes at least one of the following: a priority order of at least two outbound orders, and a time order in which the at least two outbound orders are assigned to the workstation.

A priority of the outbound order may be preset. When a system receives a plurality of outbound orders, the outbound orders may be delivered to the workstation and carrying tasks may be assigned in descending order of the priority.

For example, for three outbound orders O1, O2, and O3, a priority of O1 is higher than a priority of O2, and the priority of O2 is higher than a priority of O3.

When the outbound orders are delivered, the outbound order O1 may be first allocated to one workstation, then the outbound order O2 is allocated to one workstation, and finally, the outbound order O3 is allocated to one workstation. Workstations corresponding to O1, O2, and O3 may be the same or different.

When the carrying tasks are assigned, a robot is first assigned to a carrying task corresponding to a material needed in O1, then a robot is assigned to a carrying task corresponding to a material needed in O2, and finally, a robot is assigned to a carrying task corresponding to a material needed in O3. One outbound order may correspond to one or more robots.

In practical application, when an outbound order is allocated, a quantity of existing outbound orders at the workstation may be considered, and the outbound order may be first allocated to a workstation with fewer outbound orders. In this way, the outbound order allocated first may be allocated to the workstation with fewer outbound orders, which helps reduce picking waiting duration of the outbound order.

Certainly, when a carrying task is assigned, a quantity of tasks to be performed by the robot may be considered, and a material is first assigned to a robot with fewer to-be-performed tasks. In this way, a material of the outbound order that is first allocated may be allocated to the robot with fewer to-be-performed tasks, which helps reduce carrying waiting duration of the material.

The foregoing process of allocating the outbound order and assigning the carrying task based on a priority needs to depend on the priority of the outbound order. When there is no priority in the outbound order, a robot may be first assigned to the carrying task corresponding to the material needed by the earlier assigned outbound order based on an order in which outbound orders are assigned to the workstation. In this way, a case in which the carrying task of the material is unassigned for a long time may be avoided.

In block S202: Determining a control strategy for a third robot based on whether robots corresponding to the first outbound order include a second robot, where the second robot is a robot other than the first robot that corresponds to the first outbound order, the control strategy includes controlling the third robot to suspend performing a carrying task, the carrying task includes a carrying task corresponding to at least one second outbound order, and the at least one second outbound order is an outbound order other than the first outbound order among outbound orders that are assigned to the workstation.

The foregoing control strategy not only includes controlling the third robot to suspend performing the carrying task, but also includes: controlling the third robot to continue performing the carrying task, and march to a corresponding queuing position of the workstation to queue.

Specifically, when the robots corresponding to the first outbound order include the second robot, it indicates that remaining materials of the first outbound order are being carried by the second robot, but do not arrive at the workstation. To ensure that a plurality of materials of the first outbound order are continuously carried to the workstation, it needs to wait for the second robot to carry the remaining materials of the first outbound order to the workstation. In this case, it is determined that the control strategy for the third robot is to control the third robot to suspend performing the carrying task, or control the third robot to continue performing the carrying task, and march to a corresponding queuing position of the workstation to queue.

In practical application, if a queuing position is set up at the workstation, the third robot may be controlled to enter the queuing position to queue. If a queuing position is not set up at the workstation, the third robot may be controlled to suspend performing the carrying task.

It may be understood that, the second robot is a remaining robot other than the first robot among robots that carry the materials of the first outbound order.

When the robots corresponding to the first outbound order include only the first robot, it indicates that all materials of the first outbound order are carried to the workstation by the first robot, and there is no material that does not arrive at the workstation. In this case, the materials of the first outbound order may be picked, and because the plurality of materials of the first outbound order are continuously carried to the workstation, the materials of the first outbound order is not mixed with a material of the second outbound order. In this scenario, the control strategy is to control the third robot to continue performing the carrying task.

The following describes a relationship between the first robot, the first outbound order, the second outbound order, and the third robot by using examples.

For example, three outbound orders O1, O2, and O3 are assigned to the foregoing workstation. Materials needed in O1 include M11, M12, and M13, a material needed in O2 is M2, and materials needed in O3 include M31 and M32. Robots corresponding to M11, M12, M13, M2, M31, and M32 are R11, R12, R13, R2, R31, and R32 respectively.

In a first example, when R11 first carries the material M11 to the workstation, R11 is a first robot, and an outbound order O1 corresponding to M11 is a first outbound order. The robots R12 and R13 corresponding to the remaining materials M12 and M13 of the first outbound order O1 are second robots. Outbound orders O2 and O3 other than the first outbound order O1 are second outbound orders, and the robots R2, R31, and R32 of the second outbound orders O2 and O3 are third robots.

In the foregoing first example, because there are second robots R12 and R13, the third robots R2, R31, and R32 may be controlled to suspend performing the carrying task, or the third robot may be controlled to continue performing the carrying task, and march to a corresponding queuing position of the workstation to queue.

In a second example, when R2 first carries the material M2 to the workstation, R2 is a first robot, and an outbound order O2 corresponding to R2 is a first outbound order. There are no remaining materials of the first outbound order O2, and therefore, there is no second robot. Outbound orders O1 and O3 other than the first outbound order O2 are second outbound orders, and the robots R11, R12, R13, R31, and R32 of the second outbound orders O1 and O3 are third robots.

In the foregoing second example, because there is no second robot, the third robots R11, R12, R13, R31, and R32 may be controlled to continue performing the carrying task.

Certainly, it should be noted that, when there is no robot to carry a material to the workstation, carrying tasks of all robots continue to be performed.

In block S203: Controlling the third robot according to the control strategy.

Specifically, when the control strategy is to suspend performing the carrying task, the robot is controlled to suspend performing the carrying task. When the control strategy is to continue performing the carrying task, the robot is controlled to continue performing the carrying task.

Certainly, when the control strategy is to control the robot to suspend performing the carrying task, in a specific time period after controlling the third robot according to the control strategy, the second robot of the first outbound order may also carry the remaining materials of the first outbound order to the workstation. If all the robots corresponding to the first outbound order arrive at the workstation, it indicates that all the materials of the first outbound order are carried to the workstation. In this case, materials on the workstation are all the materials of the first outbound order, and the materials of the first outbound order are not mixed with the material of the second outbound order. Therefore, the third robot may be controlled to continue performing the carrying task.

The foregoing process is described below through a third example, and the third example is performed based on the foregoing first example.

In the foregoing first example, when the first robot R11 carries the material M11 to the workstation, the third robots R2, R31, and R32 may be controlled to suspend performing the carrying task, or the third robot may be controlled to continue performing the carrying task, and march to a corresponding queuing position of the workstation to queue.

Therefore, in the third example, after the third robots R2, R31, and R32 are controlled to suspend performing the carrying task, or the third robot is controlled to continue performing the carrying task, and march to a corresponding queuing position of the workstation to queue, because the second robots R12 and R13 continue performing the carrying task, when the second robots R12 and R13 carry the materials M12 and M13 of the first outbound order to the workstation, the third robots R2, R31, and R32 are controlled to continue performing the carrying task, to carry M2, M31, and M32 to the workstation.

Certainly, time points at which the third robots R2, R31, and R32 respectively carry M2, M31 and M32 to the workstation may also be different.

For example, when R31 first carries M31 to the workstation, the first robot is updated to R31, the second robot is updated to R32, and the third robot is updated to R2. In this case, the second robot R32 may be controlled to continue performing the carrying task, and the third robot R2 may be controlled to suspend performing the carrying task.

Finally, when the second robot R32 also arrives at the workstation, the third robot may be controlled to continue performing the carrying task. In this way, all the robots carry the materials to the workstation.

When the third robot is controlled to suspend performing the carrying task, in a possible example, there is only the material corresponding to the second outbound order on the third robot. Then, controlling the third robot to suspend performing the carrying task may be controlling the third robot to wait in place, or may be controlling the third robot to retrieve the material of the second outbound order to the third robot, and then wait at a position outside the workstation.

It may be learnt that, in embodiments of this disclosure, the third robot may be controlled to wait at the position outside the workstation, to prevent the third robot from occupying a space around the workstation. Therefore, it may be ensured that the second robot corresponding to the first outbound order successfully arrives at the workstation, to sequentially carry the materials of the first outbound order to the workstation. This helps reduce picking duration of the first outbound order.

In another possible example, the third robot includes a fourth robot, and carrying tasks of the fourth robot include tasks corresponding to the first outbound order and the second outbound order. In a process of controlling the third robot to suspend performing the carrying task, when the third robot is the fourth robot, the fourth robot is controlled to suspend performing the carrying task corresponding to the second outbound order, and continue performing the carrying task corresponding to the first outbound order.

The foregoing scenario is described below through a fourth example.

In the fourth example, three outbound orders O1, O2, and O3 are assigned to the workstation. Materials needed in O1 include M11, M12, and M13, a material needed in O2 is M2, and materials needed in O3 include M31 and M32. Robots corresponding to M11, M12, M13, M2, M31, and M32 are R11, R12, R13, R2, R11, and R11 respectively.

When R12 first carries the material M12 to the workstation, R12 is a first robot, and an outbound order O1 corresponding to M12 is a first outbound order. The robots R11 and R13 corresponding to the remaining materials M11 and M13 of the first outbound order O1 are second robots. Outbound orders O2 and O3 other than the first outbound order O1 are second outbound orders, and the robots R2 and R11 of the second outbound orders O2 and O3 are third robots.

It may be learnt that, both the material M11 of the first outbound order O1 and the materials M31 and M32 of the second outbound order O3 correspond to the robot R11. R11 is both the third robot and the second robot, which means that R11 is the fourth robot. Therefore, when the first robot R12 arrives at the workstation, the fourth robot R11 cannot be controlled to wait, but the fourth robot R11 is controlled to suspend performing carrying tasks of the materials M31 and M32 of the second outbound order O3, and continue performing the carrying task of the material M11 of the first outbound order O1. In this way, it may be ensured that the materials of the first outbound order are successfully carried to the workstation.

It should be noted that, in embodiments of this application, when the first robot arrives at the workstation, the carrying task of the second outbound order performed by the fourth robot may be in any state. A task state may include but is not limited to: The material of the second outbound order is not retrieved to the fourth robot, and the material of the second outbound order is retrieved to the fourth robot.

When the material of the second outbound order is retrieved to the fourth robot, that the fourth robot is controlled to suspend performing the carrying task of the second outbound order, and continue performing the carrying task of the first outbound order may be: first, controlling the fourth robot to perform the carrying task of the first outbound order, to place the materials of the first outbound order on the workstation; and then, controlling the fourth robot to leave from the workstation.

It may be learnt that, in the foregoing case, that the fourth robot is controlled to suspend performing the carrying task of the second outbound order is: controlling the fourth robot to no longer continue carrying the material of the second outbound order to the workstation, but perform the carrying task of the first outbound order with the material of the second outbound order on the fourth robot, and carry the materials of the first outbound order to the workstation. In this case, when the fourth robot continues performing the carrying task of the second outbound order, the fourth robot does not need to retrieve the material of the second outbound order. Instead, the fourth robot carries the material of the second outbound order on the fourth robot to the workstation again. Therefore, time for retrieving the material of the second outbound order may be saved, and execution efficiency of the carrying task of the second outbound order may be improved.

The foregoing case is described below through a fifth example. The fifth example is performed based on the fourth example.

It may be learnt that, in the foregoing fourth example, when the first robot R12 arrives at the workstation, the fourth robot R11 is controlled to suspend performing carrying tasks of the materials M31 and M32 of the second outbound order O3, and continue performing the carrying task of the material M11 of the first outbound order O1.

Therefore, in the fifth example, if the materials M31 and/or M32 of the second outbound order O3 are retrieved to the fourth robot R11, the fourth robot R11 may be controlled to carry the material M11 of the first outbound order O1 to the workstation, to place the material M11 of the first outbound order O1 on the workstation. Then, the fourth robot R11 is controlled to leave from the workstation with the materials M31 and/or M32 of the second outbound order O3.

Optionally, before controlling the fourth robot to leave from the workstation, it further needs to determine whether the fourth robot is a robot that last arrives among the robots corresponding to the first outbound order.

If the fourth robot is not a robot that last arrives at the workstation and that is of the first outbound order, after the fourth robot places the materials of the first outbound order on the workstation, the fourth robot may be controlled to leave from the workstation. In this way, the fourth robot may be prevented from occupying the space around the workstation, and it is ensured the robot that is of the first outbound order and that does not arrive at the workstation successfully arrives at the workstation.

If the fourth robot is the robot that last arrives among the robots corresponding to the first outbound order, after the fourth robot places the materials of the first outbound order on the workstation, the fourth robot is controlled to place the material of the second outbound order on the workstation. In this way, the fourth robot may be prevented from leaving from the workstation and carrying the material of the second outbound order to the workstation again. This saves carrying duration of the fourth robot, and further improves sorting efficiency of the workstation.

Certainly, the fourth robot may be controlled to place the material of the second outbound order on the workstation after the materials of the first outbound order at the workstation are sorted and are moved out of the workstation. In this way, a case in which the material of the second outbound order is mixed with the materials of the first outbound order may be further avoided.

That when the material of the second outbound order is not retrieved to the fourth robot, the fourth robot is controlled to suspend performing the carrying task of the second outbound order is: controlling the fourth robot to no longer retrieve the material of the second outbound order. In this way, a case in which picking of the first outbound order is in a waiting state due to retrieving of the material of the second outbound order may be avoided, and waiting duration of the first outbound order is reduced.

The foregoing case is described below through a sixth example. The sixth example is performed based on the fourth example.

Similarly, in the foregoing fourth example, when the first robot R12 arrives at the workstation, the fourth robot R11 is controlled to suspend performing carrying tasks of the materials M31 and M32 of the second outbound order O3, and continue performing the carrying task of the material M11 of the first outbound order O1.

Therefore, in the sixth example, if the materials M31 and/or M32 of the second outbound order O3 are not retrieved to the fourth robot R11, the fourth robot R11 may be controlled to no longer retrieve the materials M31 and/or M32 of the second outbound order O3, but control the fourth robot R11 to carry the material M11 of the first outbound order O1 to the workstation, to place the material M11 of the first outbound order O1 on the workstation.

It may be learnt that, the fourth robot needs to first place the materials of the first outbound order on the workstation, and does not put down the material of the second outbound order. In this case, there is at least one idle position on the fourth robot, and the idle position is a position occupied by the materials of the first outbound order. To make full use of the idle position, that the fourth robot is controlled to leave from the workstation may be controlling, after controlling the fourth robot to carry remaining materials to the fourth robot, the fourth robot to wait at a position outside the workstation, where the remaining materials include to-be-carried materials of the fourth robot. In this way, the fourth robot is prevented from waiting in place, and duration needed to carry all materials of all outbound orders to the workstation is shorten.

The remaining materials are to-be-carried materials assigned to the fourth robot. The to-be-carried materials assigned to the fourth robot may be the materials of the first outbound order or the materials of the second outbound order.

The foregoing case is described below through a sixth example. The sixth example is performed based on the fifth example.

It may be learnt that, in the foregoing fifth example, the fourth robot R11 places the material M11 of the first outbound order O1 on the workstation, and leaves from the workstation with the materials M31 and/or M32 of the second outbound order O3.

Therefore, in the foregoing fifth example, the leaving from the workstation with the materials M31 and/or M32 of the second outbound order O3 may be: The fourth robot R11 may retrieve the remaining materials with the material M31 of the second outbound order O3. Because the materials assigned to R11 include M11, M31, and M32, when M32 is one of the to-be-carried materials, the fourth robot R11 may be controlled to retrieve M32 with M31, and wait in place after retrieving M32.

It should be noted that, the position outside the workstation includes at least one of the following: a first position at which the fourth robot is located when the material of the second outbound order is retrieved, and any position that is passed through when moving from the first position to the workstation.

It may be understood that, if the fourth robot needs to wait at a target position, the fourth robot needs to first move from the first position to the target position, and then continue moving from the target position to the workstation when continuing performing the carrying task. If the target position is not on a moving route from the first position to the workstation, the fourth robot needs to move an additional distance. In this way, a carrying distance of the fourth robot is increased. However, in embodiments of this application, the fourth robot may wait at the position that is passed through when moving from the first position to the workstation, to reduce the carrying distance of the fourth robot as much as possible.

Certainly, if the materials assigned to the fourth robot are carried to the workstation or are already on the fourth robot, the fourth robot does not need to be controlled to retrieve the remaining materials. Instead, the fourth robot is controlled to leave from the workstation after putting down the materials of the first outbound order. The fourth robot may wait at the queuing position of the workstation after leaving from the workstation, or may wait at another position other than the workstation.

Embodiments of this application may be applied to a production scenario. In the production scenario, after a robot of any of the foregoing outbound orders carries all materials of the outbound order to the workstation, picking personnel need to pick out some materials, and place the materials into a put wall, to carry the materials to a production line for processing. The put wall is any device, for example, a material truck, configured to store the materials that are picked out. In such a scenario, if a material of one outbound order is mixed with a material of another outbound order, it causes the material of the another outbound order to be mistakenly delivered to a production line that does not need the material. In this case, production line personnel need to report the error, and require materials to be reassigned and carried. This reduces a production line rate. In embodiments of this application, such a case may be avoided from happening.

To further avoid confusion of materials of outbound orders, materials of one outbound order may be picked into a same material truck. In other words, materials of different outbound orders are located in different material trucks. Materials of a same outbound order may be placed into one or more material trucks, but there are only materials of one outbound order in one material truck.

After the material truck is filled with materials, a smart carrying forklift is controlled to remove the material truck from the workstation. Specifically, after the smart carrying forklift may lift the material truck from a bottom portion of the material truck, the smart carrying forklift may carry the material truck and move the material truck away.

After the material truck filled with materials is carried away, another smart carrying forklift may be further controlled to send an empty material truck to the nearby of the workstation, to load materials that are subsequently picked at the workstation.

Certainly, embodiments of this application may be further applied to a common outbound scenario. For example, materials may be goods, and the goods that are picked out are packaged and shipped to a customer who purchases the goods. If goods ordered by one customer are mixed with goods of another customer, it leads to customer complaints and economic losses. In embodiments of this application, such a case may be avoided from happening.

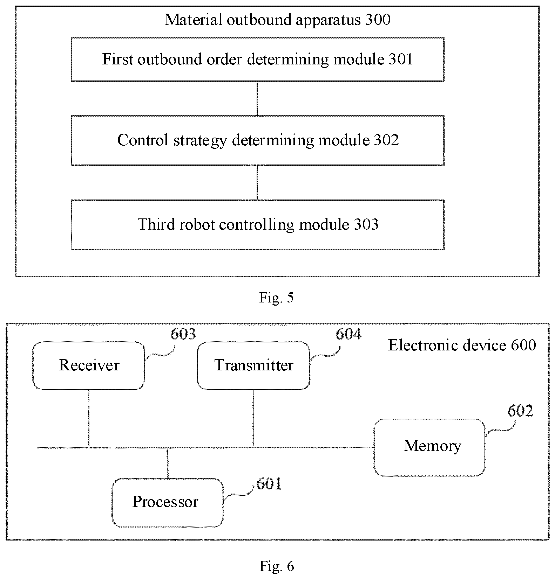

Corresponding to the material outbound method in the foregoing embodiment, FIG. 5 is an example of a structural block diagram of a material outbound apparatus according to an embodiment of this application. For ease of description, only a part related to embodiments of this application is shown. Referring to FIG. 5, the foregoing material outbound apparatus 300 includes: a first outbound order determining module 301, a control strategy determining module 302, and a third robot controlling module 303.

The first outbound order determining module 301 is configured to determine a first outbound order corresponding to a first robot among at least one robot, where a carrying task performed by the at least one robot corresponds to a same workstation, and the first robot is a robot among the at least one robot that first carries a material to the workstation.

The control strategy determining module 302 is configured to determine a control strategy for a third robot based on whether robots corresponding to the first outbound order include a second robot, where the second robot is a robot other than the first robot that corresponds to the first outbound order, the control strategy includes controlling the third robot to suspend performing a carrying task, the carrying task includes a carrying task corresponding to at least one second outbound order, and the at least one second outbound order is an outbound order other than the first outbound order among outbound orders that are assigned to the workstation.

The third robot controlling module 303 is configured to control the third robot according to the control strategy.

Optionally, the control strategy determining module is further configured to:
determine, if the robots corresponding to the first outbound order include the second robot, that the control strategy for the third robot is to control the third robot to suspend performing the carrying task.

Optionally, the third robot controlling module is further configured to:
after controlling the third robot according to the control strategy, control, when all the robots corresponding to the first outbound order arrive at the workstation, the third robot to continue performing the carrying task.

Optionally, the control strategy determining module is further configured to:
determine a control strategy for a third robot based on whether robots corresponding to the first outbound order include a second robot, and determine, if the robots corresponding to the first outbound order include only the first robot, that the control strategy for the third robot is to control the third robot to suspend performing the carrying task, or control the third robot to continue performing the carrying task, and march to a corresponding queuing position of the workstation to queue.

Optionally, each robot corresponds to one outbound order.

Optionally, the control strategy includes:
controlling the third robot to retrieve a material of the second outbound order to the third robot, and to wait at a position outside the workstation.

Optionally, each robot corresponds to at least two outbound orders, the fourth robot includes a fourth robot, carrying tasks of the fourth robot include a task corresponding to the first outbound order and the task corresponding to the second outbound order, and the control strategy includes:
controlling the fourth robot to suspend performing the carrying task of the second outbound order, and continue performing the carrying task of the first outbound order.

Optionally, the control strategy includes:
controlling, if the fourth robot does not retrieve a material of the second outbound order to the fourth robot, the fourth robot to suspend performing the carrying task of the second outbound order.

Optionally, the control strategy includes:
controlling, if the fourth robot retrieves a material of the second outbound order to the fourth robot, the fourth robot to perform the carrying task of the first outbound order, to place the materials of the first outbound order on the workstation; and
controlling the fourth robot to leave from the workstation.

Optionally, the control strategy includes:
controlling, if the fourth robot is not a robot that last arrives among the robots corresponding to the first outbound order, the fourth robot to leave from the workstation.

Optionally, the control strategy includes:
controlling, if the fourth robot is a robot that last arrives among the robots corresponding to the first outbound order, the fourth robot to place the material of the second outbound order on the workstation.

Optionally, the control strategy includes:
controlling, after controlling the fourth robot to carry remaining materials to the fourth robot, the fourth robot to wait at a position outside the workstation, where the remaining materials include a to-be-carried material of the fourth robot.

Optionally, the position outside the workstation includes at least one of the following: a first position at which the fourth robot is located when the material of the second outbound order is retrieved, and any position that is passed through when moving from the first position to the workstation.

Optionally, the apparatus further includes:
a carrying task assignment module, configured to assign a carrying task to the at least one robot based on a preset order, where the preset order includes at least one of the following: a priority order of at least two outbound orders, and a time order in which the at least two outbound orders are assigned to the workstation.

Optionally, a material of each outbound order is picked into a same material truck.

The material outbound apparatus provided in this embodiment may be configured to perform the technical solution in the method embodiment shown in FIG. 4. Their implementation principles and technical effects are similar. Details are not described herein again.

FIG. 6 is an example of a structural block diagram of an electronic device according to an embodiment of this application. The electronic device 600 includes a memory 602 and at least one processor 601, where
the memory 602 stores computer-executable instructions; and
the at least one processor 601 executes the computer-executable instructions stored in the memory 602, to enable the electronic device 601 to perform the method in FIG. 4.

In addition, the electronic device may further include a receiver 603 and a transmitter 604. The receiver 603 is configured to receive information from another apparatus or device, and forward the information to the processor 601, and the transmitter 604 is configured to send the information to the another apparatus or device.

An embodiment of this application further provides a computer-readable storage medium. The computer-readable storage medium stores computer-executable instructions, and when a processor executes the computer-executable instructions, a computer device is enabled to perform the method in FIG. 4.

An embodiment of this application further provides a computer program. The computer program is configured to perform the method in FIG. 4.

Finally, it should be noted that the foregoing embodiments are merely intended for describing the technical solutions of this application other than limiting this application. Although this application is described in detail with reference to the foregoing embodiments, a person of ordinary skill in the art should understand that they may still make modifications to the technical solutions described in the foregoing embodiments or make equivalent replacements to some or all technical features thereof, without departing from the scope of the technical solutions of embodiments of this application.

## Claims

1. A material outbound method, comprising:
determining a first outbound order corresponding to a first robot among at least one robot, wherein a carrying task performed by the at least one robot corresponds to a same workstation, and the first robot is a robot among the at least one robot that first carries a material to the workstation;
determining a control strategy for a third robot based on whether robots corresponding to the first outbound order comprise a second robot, wherein the second robot is a robot other than the first robot that corresponds to the first outbound order, the control strategy comprises controlling the third robot to suspend performing a carrying task performed by the third robot, the carrying task comprises a carrying task corresponding to at least one second outbound order, and the at least one second outbound order is an outbound order other than the first outbound order among outbound orders that are assigned to the workstation; and
controlling the third robot according to the control strategy, to enable a plurality of materials corresponding to the first outbound order to be continuously carried to the workstation.

2. The method according to claim 1, wherein the determining the control strategy for the third robot based on whether the robots corresponding to the first outbound order comprise the second robot comprises:
determining, if the robots corresponding to the first outbound order comprise the second robot, that the control strategy for the third robot comprises controlling the third robot to suspend performing the carrying task.

3. The method according to claim 2, wherein after the controlling the third robot according to the control strategy, the method further comprises:
controlling, when all the robots corresponding to the first outbound order arrive at the workstation, the third robot to continue performing the carrying task.

4. The method according to claim 1, wherein the determining the control strategy for the third robot based on whether the robots corresponding to the first outbound order comprise the second robot comprises:
determining, if the robots corresponding to the first outbound order comprise only the first robot, that the control strategy for the third robot comprises controlling the third robot to suspend performing the carrying task, or controlling the third robot to continue performing the carrying task, and march to a corresponding queuing position of the workstation to queue.

5. The method according to any one of claims 1 to 4, wherein each robot corresponds to one outbound order.

6. The method according to claim 5, wherein the controlling the third robot to suspend performing the carrying task comprises:
controlling the third robot to retrieve a material of the second outbound order to the third robot, and to wait at a position outside the workstation.

7. The method according to any one of claims 1 to 4, wherein each robot corresponds to at least two outbound orders, the third robot comprises a fourth robot, carrying tasks of the fourth robot comprise a task corresponding to the first outbound order and the task corresponding to the second outbound order, and the controlling the third robot to suspend performing the carrying task comprises:
controlling the fourth robot to suspend performing the carrying task of the second outbound order, and continue performing the carrying task of the first outbound order.

8. The method according to claim 7, wherein the controlling the fourth robot to suspend performing the carrying task of the second outbound order comprises:
controlling, if the fourth robot does not retrieve a material of the second outbound order to the fourth robot, the fourth robot to suspend performing the carrying task of the second outbound order.

9. The method according to claim 7, wherein the controlling the fourth robot to suspend performing the carrying task of the second outbound order, and continue performing the carrying task of the first outbound order comprises:
controlling, if the fourth robot retrieves a material of the second outbound order to the fourth robot, the fourth robot to perform the carrying task of the first outbound order, to place the materials of the first outbound order on the workstation; and
controlling the fourth robot to leave from the workstation.

10. The method according to claim 9, wherein the controlling the fourth robot to leave from the workstation comprises:
controlling, if the fourth robot is not a robot that last arrives among the robots corresponding to the first outbound order, the fourth robot to leave from the workstation.

11. The method according to claim 9, further comprising:
controlling, if the fourth robot is a robot that last arrives among the robots corresponding to the first outbound order, the fourth robot to place the material of the second outbound order on the workstation.

12. The method according to claim 9, wherein the controlling the fourth robot to leave from the workstation comprises:
controlling, after controlling the fourth robot to carry remaining materials to the fourth robot, the fourth robot to wait at a position outside the workstation, wherein the remaining materials comprise a to-be-carried material of the fourth robot.

13. The method according to claim 12, wherein the position outside the workstation comprises at least one of the following: a first position at which the fourth robot is located when the material of the second outbound order is retrieved, and any position that is passed through by the fourth robot when moving from the first position to the workstation.

14. The method according to any one of claims 1 to 4, wherein the method further comprises:
assigning a carrying task to the at least one robot based on a preset order, wherein the preset order comprises at least one of the following: a priority order of at least two outbound orders, and a time order in which the at least two outbound orders are assigned to the workstation.

15. The method according to any one of claims 1 to 4, wherein a material of each outbound order is picked into a same material truck.

16. A material outbound apparatus, comprising:
a first outbound order determining module, configured to determine a first outbound order corresponding to a first robot among at least one robot, wherein a carrying task performed by the at least one robot corresponds to a same workstation, and the first robot is a robot among the at least one robot that first carries a material to the workstation;
a control strategy determining module, configured to determine a control strategy for a third robot based on whether robots corresponding to the first outbound order comprise a second robot, wherein the second robot is a robot other than the first robot that corresponds to the first outbound order, the control strategy comprises controlling the third robot to suspend performing a carrying task performed by the third robot, the carrying task comprises a carrying task corresponding to at least one second outbound order, and the at least one second outbound order is an outbound order other than the first outbound order among outbound orders that are assigned to the workstation; and
a third robot controlling module, configured to control the third robot according to the control strategy.

17. An electronic device, wherein the electronic device comprises:
at least one processor; and
a memory; wherein the memory Is configured to store computer-executable instructions; and
the at least one processor is configured to execute the computer-executable instructions stored in the memory, to enable the electronic device to perform the method according to any one of claims 1 to 15.

18. A computer-readable storage medium, wherein the computer-readable storage medium is configured to store computer-executable instructions; and when a processor executes the computer-executable instructions, a computer device is enabled to perform the method according to any one of claims 1 to 15.

19. A computer program, wherein the computer program is configured to perform the method according to any one of claims 1 to 15.
